# EUROPÄISCHE PATENTSCHRIFT

(11) **EP 2 918 160 B1**
(45) Veröffentlichungstag und Bekanntmachung des Hinweises auf die Patenterteilung: **01.09.2021**
(21) Anmeldenummer: 15000448.9
(22) Anmeldetag: 14.02.2015
(51) Int. Cl.: A01G 9/033

(54) **DACHBEGRÜNUNGSKASSETTE**
ROOF GREENING CARTRIDGE
CASSETTE DE GAZONNAGE DE TOIT

(30) Priorität: 06.03.2014 DE 102014002970
(43) Veröffentlichungstag der Anmeldung: 16.09.2015
(73) Patentinhaber: Soiltec GmbH, 28832 Achim (DE)
(72) Erfinder: Tietjen, Kai, 27321 Thedinghausen (DE); Adamietz, Sven, 28205 Bremen (DE)
(74) Vertreter: Heiland, Karsten

(56) Entgegenhaltungen:
- WO-A1-2010/025837
- DE-A1-102009 058 217
- FR-A1- 2 857 396
- None

## Beschreibung

Die Erfindung betrifft eine Dachbegrünungskassette, zumindest überwiegend mit Wandungen und Böden aus offene Poren aufweisendem (porösem) Material, gemäß dem Oberbegriff des Anspruchs 1. Daneben betrifft die Erfindung die Verwendung einer Kassette und ein Verfahren für die Vorbereitung und Herstellung von Dachbegrünungen sowie ein Dach mit einer aufliegenden Dachbegrünungskassette.

Herkömmliche Dachbegrünungen sind aus mehreren Lagen aufgebaut, die nacheinander auf ein Dach aufgebracht werden. Verbreitet ist die Verwendung von Sedumpflanzen. Diese können auf Matten angezüchtet und so auf das vorbereitete Dach bzw. auf die bereits auf das Dach aufgebrachten Lagen aufgelegt werden. Alternativ werden die Sedumpflanzen erst auf dem Dach auf einer entsprechenden Substrat-Schicht kultiviert. Dies ist besonders aufwändig und lässt sich nicht automatisieren, da jedes Dach anders aufgebaut ist. Auch die Vorkultivierung von Sedum-Matten mit anschließendem Aufrollen, der Beförderung zum Dach und Ausrollen auf dem Dach ist relativ aufwendig. Beim Vorkultivieren muss auf eine genaue Bewässerung geachtet werden. Längere Trockenzeiten schaden in dieser Phase den jungen Pflanzen. Die Pflanzen können beim Aufrollen der Matten geschädigt werden.

Die Dachbegrünung kann mit Hilfe von Kassetten angelegt werden. Die Kassetten weisen oben offene Fächer auf, welche die Begrünung aufnehmen. Die Kassetten sollen einerseits Wasser speichern können. Zum anderen muss Staunässe vermieden werden. Überschüssiges Wasser muss abgegeben werden können.

Aus der DE 10 2009 058 217 A1 ist eine Dachbegrünungskassette aus Verbundschaum bekannt.

Aufgabe der vorliegenden Erfindung ist die Schaffung einer Dachbegrünungskassette mit guter Wasserdurchlässigkeit bei zugleich günstiger Wasseraufnahme.

Zur Lösung der Aufgabe weist die erfindungsgemäße Dachbegrünungskassette die Merkmale des Anspruchs 1 auf und ist durch folgende Merkmale des Anspruchs 1 gekennzeichnet:
a) Zonen unterschiedlicher Dichte, wobei die Böden eine geringere Dichte aufweisen als die Wandungen im Übrigen,
b) die Dichte des porösen Materials beträgt im Bereich der Wandungen 150 bis 190 kg/m³ und im Bereich einer Bodenwand 120 bis 160 kg/m³,
c) das poröse Material weist eine Wasseraufnahme von 15 bis 30 Liter/m² bei einer Materialdicke von 30 mm auf,
d) das poröse Material weist eine Wasserdurchlässigkeit normal zur Ebene von 8 bis 16 Liter/(m² s) auf, bei einer Wassersäule von 200 mm und einer Materialdicke von 30 mm.

Die Wasseraufnahme beträgt vorzugsweise 20 bis 25 Liter/m² und je Kassette etwa 4 bis 9 Liter, vorzugsweise 5,5 bis 7,5 Liter. Die Wasserdurchlässigkeit wird gemäß DIN EN ISO 11058 ermittelt und beträgt vorzugsweise 10 bis 14 Liter/(m² x Sekunde), insbesondere etwa 12Liter/(m² x Sekunde).

Das poröse Material ist zugleich wasserspeichernd und wasserdurchlässig. Versuche haben ergeben, dass die genannten Eigenschaften in Kombination miteinander besonders vorteilhaft sind.

Nach einem weiteren Gedanken der Erfindung weist das poröse Material eine oder mehrere der nachfolgenden Eigenschaften auf:
a) eine Luftdurchlässigkeit von mindestens 400 Liter/(m² x Sekunde) bei 200 Pascal Prüfdruck bzw. Druckdifferenz, gemessen an einem Prüfkörper von 10 mm Dicke,
b) 600 bis 900 Zellen pro cm².

Aufgrund der Luftdurchlässigkeit ist eine gute Belüftung gewährleistet. Die Luftdurchlässigkeit wird gemäß TexTest geprüft und beträgt insbesondere 550 bis 750 Liter/(m² x Sekunde), vorzugsweise etwa 644 Liter/(m² x Sekunde). Die Poren werden auch als Zellen bezeichnet und können Feuchtigkeit aufnehmen. Gezählt werden die an einer Schnittfläche sichtbaren Zellen. Insbesondere sind 700 bis 800 Zellen pro cm² vorgesehen.

Nach einem weiteren Gedanken der Erfindung weist das poröse Material eine Zugfestigkeit von mindestens 100 kPascal, insbesondere von 120 bis 140 kPascal, vorzugsweise von etwa 128 kPascal auf. Mit der angegebenen Zugfestigkeit sind ein hoher Befüllungsgrad sowie eine maschinelle Handhabung der Dachbegrünungskassette möglich. Die angegebenen Werte gelten insbesondere im Bereich einer Bodenwand und sind nach DIN EN ISO 1798 zu ermitteln.

Nach einem weiteren Gedanken der Erfindung weist das poröse Material eine oder mehrere der nachfolgenden Eigenschaften auf:
a) eine Bruchdehnung von mindestens 60%, insbesondere von 70 bis 85%,
b) eine Stauchhärte von mindestens 20 kPascal, insbesondere von 24 bis 28 kPascal,
c) das poröse Material enthält zur UV-Stabilisierung Rußpartikel (Carbon Black).

Die Werte betreffen insbesondere Bodenwand oder Böden. Die Bruchdehnung wird nach DIN EN ISO 1798 berechnet und beträgt vorzugsweise etwa 77%. Die Stauchhärte gemäß DIN EN ISO 3386-1 (40%) liegt vorzugsweise bei etwa 26 kPascal.

Als Böden werden im Wesentlichen horizontale Wände insbesondere unterhalb der Begrünung oder Füllung einer Kassette oder eines Faches angesehen. Mehrere Böden können zusammen die Bodenwand bilden und mit Unterbrechungen zueinander benachbart sein oder übergangslos bzw. mit Übergängen ineinander übergehen. Wandungen sind im Wesentlichen aufrechte Seitenwände der Kassetten oder Fächer. Seitenwände in diesem Sinne sind auch Rückwände oder Stirnwände.

Nach einem weiteren Gedanken der Erfindung bestehen zumindest die Böden bzw. die Bodenwand ganz oder überwiegend aus dem porösen Material. Gerade im Bereich der Böden wirken sich die angegebenen Materialeigenschaften besonders stark aus.

Vorteilhafterweise bestehen Wandungen und Böden ganz oder überwiegend aus dem porösen bzw. offenporigen Material. Dies erleichtert die Herstellung in einem oder wenigen Verfahrensschritten.

Nach einem weiteren Gedanken der Erfindung ist das poröse Material elastisch, offenzellig und inhomogen. Vorzugsweise sind innerhalb der Kassette Zonen mit unterschiedlicher Härte und/oder Dichte vorgesehen. Das Material ist leicht zu handhaben, bruchunempfindlich und kann aus Recyclingmaterial hergestellt werden.

Nach einem weiteren Gedanken der Erfindung weist die Dachbegrünungskassette wenigstens ein durch Wandungen und Boden gebildetes, oben offenes Fach auf, vorzugsweise mit einer Füllung anorganischer Stoffe, letztere insbesondere mit einer Korngröße von 0,5 mm bis 10 mm.

Die Dachbegrünungskassette mit einem Fach oder mehreren Fächern ist automatisiert befüllbar, ebenso eine Vielzahl von Kassetten. Auch können Kassetten leicht automatisiert gehandhabt werden. Die Bodenwand kann eine hierfür geeignete Steifigkeit aufweisen. Bodenwand und Seitenwände wirken stabilisierend.

Die Wandungen und Böden der Kassetten können massiv oder perforiert ausgebildet sein, aus hartem oder weichem Werkstoff bestehen. Zumindest eine Wasserdurchlässigkeit der Böden wird bevorzugt.

Die Dichte (gemäß DIN EN ISO 845) des porösen Materials im Bereich der Wandungen beträgt 150 bis 190 kg/m³, vorzugsweise etwa 171 kg/m³. Die Dichte (gemäß DIN EN ISO 845) des porösen Materials im Bereich der Bodenwand beträgt 120 bis 160 kg/m³, vorzugsweise etwa 139 kg/m³.

Vorteilhafterweise weist die Kassette Wandungen und/oder Böden aus selektiertem Material unterschiedlicher Dichte auf, insbesondere hergestellt aus selektierten PUR-Flocken unterschiedlicher Dichte. Auch können für Seitenwandungen einerseits und Bodenwandungen andererseits unterschiedliche Werkstoffe verwendet werden. Bevorzugt ist aber ein einheitlicher Werkstoff. Das genannte Material ist leicht verarbeitbar, kann zugeschnitten und geklebt werden und ist kostengünstig erhältlich. Insbesondere ist das Material elastisch nachgiebig.

In der Erfindung ist auch vorgesehen, dass die Kassette Zonen unterschiedlicher Dichte aufweist, wobei insbesondere die Böden bzw. eine Bodenwand eine geringere Dichte aufweist als die Wandungen im Übrigen.

Der verwendete Werkstoff ist vorzugsweise schwer entflammbar, entsprechend der deutschen Brandschutzklasse B1. Stoffe der Klasse B2 können auch verwendet werden. Nach einem weiteren Gedanken der Erfindung sind die Wandungen und/oder Böden durchwurzelungsfähig ausgebildet. Vorzugsweise ist der verwendete Werkstoff als solcher durchwurzelungsfähig, beispielsweise das zuvor genannte Material.

Dabei sollen die Wandungen oder Böden möglichst auch drainagefähig sein. Wasser wird bis zu einer bestimmten Menge in Poren oder ähnlichen Zwischenräumen gespeichert, etwa durch Kapillarwirkung. Darüber hinaus zugeführtes Wasser, etwa durch künstliche Bewässerung oder durch Niederschlag, fließt ab oder sickert aus Wandungen und Böden heraus. Diese sind deshalb vorzugsweise außen nicht wasserundurchlässig versiegelt, sondern insbesondere offenporig ausgebildet.

Die Wandungen oder Böden sind vorzugsweise "optisch dicht" und weisen jeweils einen durchgehenden, kompakten Aufbau auf. Durchbrüche, Öffnungen, Schlitze, Ausnehmungen und dergleichen sind nicht vorgesehen, sodass auch kleine Mengen des Substrats nicht durch die Wandungen oder Böden hindurch gelangen können mangels ausreichender Zwischenräume. Die Fächer der Kassette sind nur oben, also außerhalb der Wandungen und Böden offen.

Der Werkstoff der Wandungen und Böden ist so weich und/oder durchlässig, dass die genannte Durchwurzelungsfähigkeit gegeben ist, insbesondere für Sedum.

Andere Werkstoffe, die die genannten Eigenschaften in der Summe oder einzeln aufweisen, sind aber ebenfalls verwendbar, z. B. durch Gießen, Blasen, Spritzen, Pressen oder Schäumen zu verarbeitende Substanzen, wie als Schnitzel oder Fasern vorliegende Werkstoffe, auch in Verbindung mit Matrixmaterialien zur Erzielung eines festeren und dauerhafteren Verbunds. So können Naturfasern oder Papierschnitzel mit einem den Verbund erhöhenden Bindemittel als Matrixwerkstoff zu Wandungen oder Böden verpresst werden. Wasserspeicherung, Wasserdurchlässigkeit bzw. Drainagefähigkeit und/oder Durchwurzelung werden durch Auswahl der Fasern und Matrixwerkstoffe bestimmt.

Insbesondere durch die wasserspeichernde Eigenschaft ist es möglich die Kassette kostensparend herzustellen durch Befüllung mit Substrat, einschließlich Erde, Dünger, Sprossen oder Samen, und mit einer ersten definierten Menge an Wasser. Dieses wird in den Wandungen oder im Boden der Kassette gespeichert. Eine Wasserzufuhr ist dadurch erst nach längerer Zeit erforderlich. Dies verbilligt die Anzucht am Boden und die weitere Pflege auf dem Dach. Die Dachbegrünungskassette wird vorzugsweise mit den vorkultivierten Pflanzen auf das zu begrünende Dach aufgelegt, nach entsprechender Vorbereitung desselben. Die Kassette verbleibt auf dem Dach.

Nach einem weiteren Gedanken der Erfindung weist die Dachbegrünungskassette mehrere nebeneinander und/oder hintereinander angeordnete, oben offene Fächer auf. Die Größe der einzelnen Fächer und die Höhe von Zwischenwandungen kann in Abhängigkeit von der Dachneigung und/oder anderen Parametern vorgesehen sein. Für ein typisches Gründach geeignet sind beispielsweise Kassetten der Abmessung 60 cm x 100 cm mit einer Innenraumhöhe von etwa 3 cm, Wandstärken von etwa 1 cm und in der Aufteilung mit 3 x 7 Fächern, wobei ein Fach innen etwa 19 cm x 14 cm misst. Andere Abmessungen und Aufteilungen sind möglich, zumindest in Abhängigkeit von der Gesamtmasse, den verwendeten Pflanzen, der Stabilität der Kassette und der Dachneigung.

Nach einem weiteren Gedanken der Erfindung enthält mindestens ein Fach anorganische Stoffe, vorzugsweise als Wasserspeicher, insbesondere Naturbims, Blähton, Lava, Leichtlava und/oder Blähschiefer. Die anorganischen Stoffe sind Teil des Substrats. Insbesondere handelt es sich um mineralische Stoffe.

Bevorzugt ist eine Ausführung, bei der die anorganischen Stoffe eine Korngröße von 0,5 mm bis 10 mm aufweisen, vorzugsweise bis etwa 3 mm. Zusätzlich oder alternativ werden folgende Volumengewichte bevorzugt:
- Naturbims 0,3 bis 1,1 kg/l bzw. t/m³
- Blähton 0,35 bis 1,8 kg/l
- Lava/Leichtlava 0,75 bis 1,5 kg/l
- Blähschiefer 0,9 bis 1,8 kg/l.

Nach einem weiteren Gedanken der Erfindung enthält mindestens ein Fach ein dreidimensionales Wirrgelege, Drainagegeflecht und/oder Speichervlies, wobei diese Teile zusätzlich zum Substrat im Fach angeordnet sind. Das Wirrgelege oder Drainagegeflecht weist beispielsweise ein Flächengewicht von 300 - 800 g/m² bei einer Schichtdicke von 5 - 25 mm auf und besteht vorzugsweise aus PP (Polypropylen).

Die genannten anorganischen Stoffe und/oder das Wirrgelege, Drainagegeflecht oder Speichervlies sollen die Wasserspeicherfähigkeit erhöhen. Daneben können Schadstoffe gebunden oder gefiltert werden. Auch können chemisch-physikalische Prozesse ausgelöst werden, etwa eine Änderung des ph-Wertes durch Verwendung entsprechender anorganischer Stoffe. Wirrgelege, Drainagegeflecht oder Speichervlies können anorganisch, mineralisch oder organisch sein oder entsprechende Bestandteile aufweisen. Auch können Verbundwerkstoffe hierfür oder für die Wandungen und Böden verwendet werden.

Nach einem weiteren Gedanken der Erfindung enthält das Substrat organisches Material, insbesondere 5 Gewichtsprozent oder mehr. Bevorzugt sind insbesondere höchstens 50 Gewichtsprozent an organischem Material. Im Übrigen sind im Substrat anorganische Stoffe, Saatgut, Sprossen oder Pflanzen und Dünger enthalten. Bei dem organischen Material handelt es sich vorzugsweise um Erde bzw. Boden.

Die Kassette ist vorteilhafterweise hergestellt durch ausgeschnittene und miteinander verklebte oder verschweißte Wandungen. Möglich ist auch die Herstellung als gezogenes oder gepresstes Formteil.

Nach einem weiteren Gedanken der Erfindung weist die Dachbegrünungskassette an ihrer Unterseite Verstärkungsrippen auf, insbesondere zumindest in einer Richtung mittig unter den oberseitig gebildeten Fächern.

Nach einem weiteren Gedanken der Erfindung weist die Dachbegrünungskassette unterseitig Rillen auf, für eine bessere Dränage und/oder zur Aufnahme von Verstärkungsprofilen bzw. einer Auflattung zur Schubkraftaufnahme auf einem geneigten Dach.

Die unterseitigen Rillen verlaufen vorzugsweise mittig unter oberseitigen Fächern und/oder unter oberseitigen Wandungen. Insbesondere verlaufen die Rillen unmittelbar unter oberseitigen Wandungen und parallel zu diesen. Möglich ist auch eine Kombination der genannten Anordnungen, nämlich zueinander kreuzende Rillen, wobei die Rillen vorzugsweise in einer Richtung mittig unter den oberseitigen Fächern und in einer hierzu quer gerichteten Richtung unmittelbar unter den oberseitigen Wandungen verlaufen.

Die unterseitigen Rillen sind vorzugsweise mit keilförmigem Querschnitt ausgebildet, nämlich mit in Richtung auf die oberseitigen Fächer oder Wandungen abnehmender Weite. In umgekehrter Weise können auch die oberseitigen Wandungen mit keilförmigem Querschnitt ausgebildet sein, nämlich mit in Richtung auf die unterseitigen Rillen zunehmender Weite. Bevorzugt sind aber oberseitige Wandungen mit rechteckigem Querschnitt.

Gegenstand der Erfindung ist auch die Verwendung der Kassette für die Vorbereitung und Herstellung von Dachbegrünungen.

Schließlich gehören zur Erfindung auch ein Verfahren zur Begrünung eines Daches und ein Dach mit Dachbegrünungskassetten.

Weitere Merkmale der Erfindung ergeben sich aus den Ansprüchen und aus der Beschreibung im Übrigen.

Vorteilhafte Ausführungsformen der Erfindung werden nachfolgend anhand von Zeichnungen näher erläutert. Es zeigen:
- Fig. 1: eine Draufsicht von oben auf eine Dachbegrünungskassette,
- Fig. 2: eine Unteransicht der Dachbegrünungskassette,
- Fig. 3: einen Längsschnitt der Dachbegrünungskassette,
- Fig. 4: einen Querschnitt der Dachbegrünungskassette,
- Fig. 5: eine perspektivische Darstellung der Dachbegrünungskassette schräg von oben,
- Fig. 6: eine Schnittfläche in vergrößerter Darstellung.

Eine Dachbegrünungskassette 10 ist quaderförmig ausgebildet und weist nebeneinander und hintereinander mehrere quaderförmige, oben offene Fächer 11 auf, hier in Längsrichtung der Kassette sieben Fächer und in Querrichtung drei Fächer, jeweils getrennt durch Seitenwände, nämlich Längswandungen 12 und Querwandungen 13. Äußere Querwandungen werden als Stirnwände 14 bezeichnet, äußere Längswandungen als Längsseitenwände 15.

Die Kassette 10 weist vorzugsweise Außen-Abmessungen von etwa 100 cm (Länge) x 60 cm (Breite) x 5 cm (Höhe) auf. Gebildet sind die Kassetten aus Streifen bzw. Platten aus selektierten PUR-Flocken mit einer Dichte von etwa 80 kg/m³. Je nach Stückzahl können die Kassetten auch einstückig hergestellt werden, etwa durch Gießen oder Pressen. Vorzugsweise wird die Kassette durch Verpressen der Flocken in einer Form hergestellt, insbesondere in Verbindung mit einer Erwärmung der Form und/oder der Flocken.

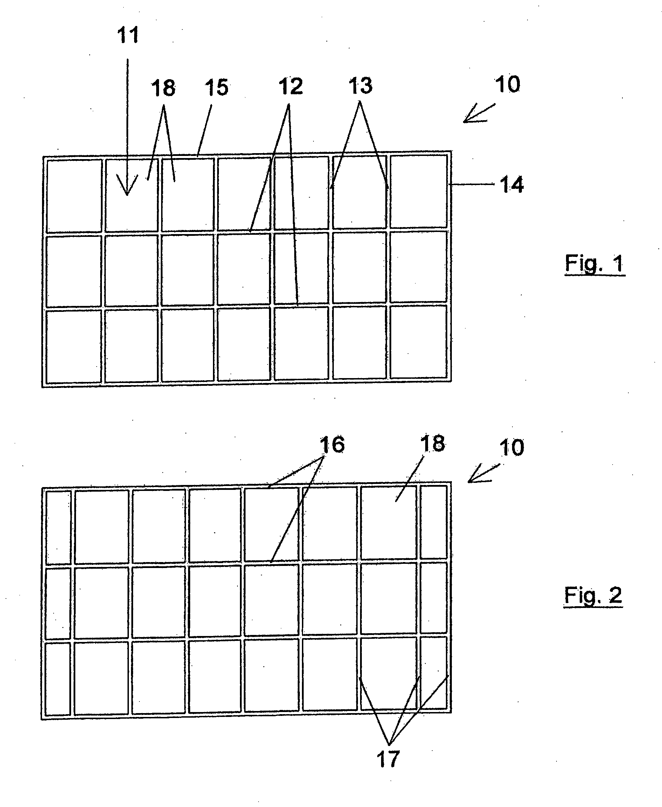

An ihrer Unterseite ist die Kassette 10 zwar eben aber mit einem Raster aus quer- und längsverlaufenden Rillen 16, 17 ausgebildet, siehe Bodenwand 18 in Fig. 2. Die Größe des derart gebildeten Rasters entspricht der Größe des Rasters aus Längswandungen 12 und Querwandungen 13. Allerdings sind die Querrillen 17 versetzt, nämlich etwa mittig zwischen den Querwandungen 13 angeordnet. Gemäß Fig. 2 liegen die Längsrillen 16 unmittelbar unterhalb der Längswandungen 12. Auch hier ist aber ein Versatz möglich, ebenso wie eine Anordnung der Querrillen 17 unmittelbar unter den Querwandungen 13.

Jedes Fach 11 weist einen eigenen Boden auf. Die Böden der Fächer 11 bilden zusammen die Bodenwand 18. Böden und Wände weisen jeweils eine Dicke von etwa 1 cm auf.

Die Rillen 16, 17 können insbesondere zwei Funktionen erfüllen. Zum einen ist über die Rillen eine Dränage möglich. Staunässe wird vermieden. Zum anderen können einzelne Rillen zur Aufnahme von Verstärkungsprofilen dienen. Dadurch können auf geneigten Dächern auftretende Schubkräfte besser aufgenommen werden.

Die Fächer 11 der Kassetten werden vorzugsweise am Boden mit Substrat 19 gefüllt. Bei dem Substrat handelt es sich insbesondere um für die Anzucht der Dachbegrünung geeignete Erde mit Samen oder Sprossen und ggf. Dünger. Bevorzugt ist eine Begrünung mit Sedum. Nach dem Befüllen werden die Kassetten auf das zu begrünende Dach aufgelegt und dort fixiert. Die Anzucht bis zur Entwicklung sichtbarer Pflanzen kann noch am Boden oder bereits auf dem Dach durchgeführt werden. Vorzugsweise wird die Anzucht vollständig am Boden ausgeführt. Dabei ist eine bessere Überwachung der Bewässerung möglich. Diese kann in größeren Zeitabständen erfolgen, etwa ein erstes Mal im Zusammenhang mit dem Befüllen der Fächer mit Substrat und dann erst wieder mit einem gewissen Zeitabstand.

Durch die Verwendung des Materials der genannten Art sind die Wandungen der Kassette - auch die Bodenwand 18 - durchwurzelungsfähig und wasserspeichernd. Je nach verwendetem Werkstoff ist auch eine lange Lebensdauer entsprechend der projektierten Lebensdauer des Daches möglich.

Die vorzugsweise mit ausgebildeter Begrünung versehenen Kassetten 10 werden auf einem nicht gezeigten Dach nebeneinander und hintereinander ohne Lücken ausgelegt. Durch das Rastermaß sich ergebende Restflächen auf dem Dach können belegt werden mit Teilkassetten. Diese können leicht hergestellt werden durch Teilen und Trennen einzelner Kassetten 10.

Die einzelnen Wandungen 12 bis 15 weisen eine Dicke von etwa 1 cm auf. Die Bodenwand 18 ist aufgrund der erforderlichen Tragfähigkeit etwas dicker ausgebildet mit einer Stärke von etwa 3 cm, abzüglich der teilweise vorgesehenen Rillen 16, 17 von 1 cm Tiefe und Breite. Dabei sind die Rillen 16, 17 auch randseitig umlaufend vorgesehen, also unterhalb der Stirnwände 14 und Längsseitenwände 15.

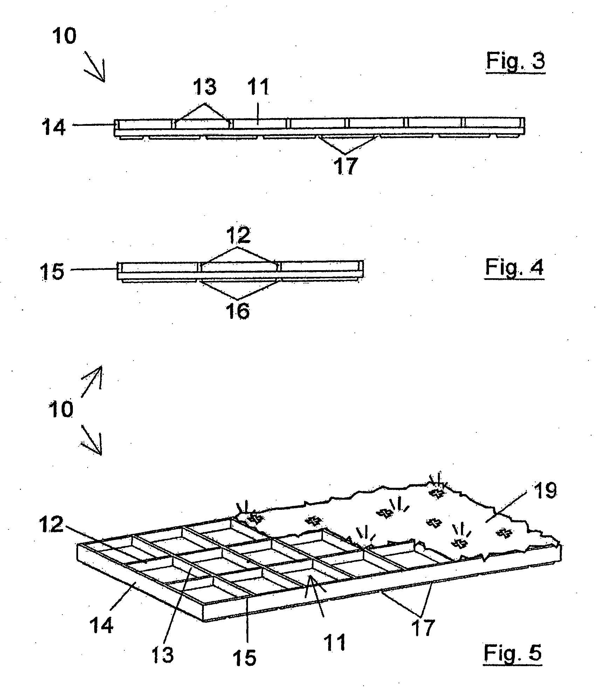

Fig. 5 zeigt eine teilweise mit Substrat 19 gefüllte Kassette 10. In der Praxis ist die Befüllung aller Fächer 11 mit Substrat vorgesehen.

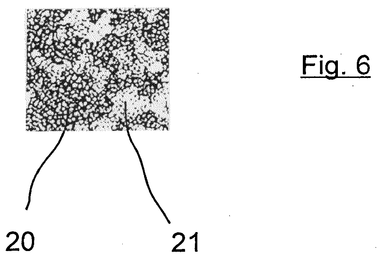

Fig. 6 zeigt eine Schnittfläche von etwa 2cm x 2cm des porösen Materials der Kassetten. Erkennbar sind Bereiche 20, 21 unterschiedlicher Dichte aufgrund eines verdichteten, inhomogenen Rohstoffs. Dieser besteht beispielsweise aus selektierten Flocken/Fasern unterschiedlicher Dichte und Größe. Teilweise sichtbar sind Poren bzw. Zellen oder Übergänge zwischen den Poren bzw. Zellen.

### Bezugszeichenliste:

- 10: Dachbegrünungskassette
- 11: Fächer
- 12: Längswandungen
- 13: Querwandungen
- 14: Stirnwände
- 15: Längsseitenwände
- 16: Längsrillen
- 17: Querrillen
- 18: Bodenwand
- 19: Substrat
- 20: Bereich
- 21: Bereich

## Patentansprüche

1. Dachbegrünungskassette, zumindest überwiegend mit Wandungen und Böden aus offene Poren aufweisendem (porösem) Material, **gekennzeichnet durch** folgende Merkmale:
a) Zonen unterschiedlicher Dichte, wobei die Böden eine geringere Dichte aufweisen als die Wandungen im Übrigen,
b) die Dichte des porösen Materials beträgt im Bereich der Wandungen 150 bis 190 kg/m³ und im Bereich einer Bodenwand 120 bis 160 kg/m³,
c) das poröse Material weist eine Wasseraufnahme von 15 bis 30 Liter/m² bei einer Materialdicke von 30 mm auf,
d) das poröse Material weist eine Wasserdurchlässigkeit normal zur Ebene von 8 bis 16 Liter/(m² s) auf, bei einer Wassersäule von 200 mm und einer Materialdicke von 30 mm.

2. Dachbegrünungskassette nach Anspruch 1, **dadurch gekennzeichnet, dass** das poröse Material eine oder mehrere der nachfolgenden Eigenschaften aufweist:
a) eine Luftdurchlässigkeit von mindestens 400 Liter/(m² s) bei 200 Pa Prüfdruck bzw. Druckdifferenz, gemessen an einem Prüfkörper von 10 mm Dicke, insbesondere von 550 bis 750 Liter/(m² s),
b) 600 bis 900 Zellen pro cm².

3. Dachbegrünungskassette nach Anspruch 1 oder 2, **dadurch gekennzeichnet, dass** das poröse Material insbesondere der Böden eine Zugfestigkeit von mindestens 100 kPa, vorzugsweise von etwa 120 bis 140 kPa aufweist.

4. Dachbegrünungskassette nach Anspruch 1 oder einem der weiteren Ansprüche, **dadurch gekennzeichnet, dass** das poröse Material eine oder mehrere der nachfolgenden Eigenschaften aufweist:
a) eine Bruchdehnung von mindestens 60 %, insbesondere von 70 bis 85 %,
b) eine Stauchhärte von mindestens 20 kPa, insbesondere von 24 bis 28 kPa,
c) das poröse Material enthält zur UV-Stabilisierung Rußpartikel (Carbon Black).

5. Dachbegrünungskassette nach Anspruch 1 oder einem der weiteren Ansprüche, **dadurch gekennzeichnet, dass** zumindest die Böden ganz aus dem porösen Material bestehen.

6. Dachbegrünungskassette nach Anspruch 1 oder einem der weiteren Ansprüche, **dadurch gekennzeichnet, dass** Wandungen und Böden ganz aus dem porösen Material bestehen.

7. Dachbegrünungskassette nach Anspruch 1 oder einem der weiteren Ansprüche, **dadurch gekennzeichnet, dass** das poröse Material elastisch, offenzellig und inhomogen ist, und Zonen mit unterschiedlicher Härte aufweist.

8. Dachbegrünungskassette nach Anspruch 1 oder einem der weiteren Ansprüche, **gekennzeichnet durch** wenigstens ein durch die Wandungen und Böden gebildetes, oben offenes Fach (11), vorzugsweise mit einer Füllung anorganischer Stoffe, letztere insbesondere mit einer Korngröße von 0,5 mm bis 10 mm.

9. Dachbegrünungskassette nach Anspruch 1 oder einem der weiteren Ansprüche, **dadurch gekennzeichnet, dass** die Wandungen optisch dicht ausgebildet sind, insbesondere ohne Durchbrüche, Öffnungen, Schlitze oder Ausnehmungen.

10. Dachbegrünungskassette nach Anspruch 1 oder einem der weiteren Ansprüche, **dadurch gekennzeichnet, dass** die Böden optisch dicht ausgebildet sind, insbesondere ohne Durchbrüche, Öffnungen, Schlitze oder Ausnehmungen.

11. Dachbegrünungskassette nach Anspruch 1 oder einem der weiteren Ansprüche, **gekennzeichnet durch** unterseitige Rillen (16, 17), insbesondere zumindest in einer Richtung mittig unter oberseitigen Fächern (11) und/oder unter oberseitigen Wandungen (12 bis 15).

12. Verwendung einer Dachbegrünungskassette nach einem der voranstehenden Ansprüche für die Vorbereitung und Herstellung von Dachbegrünungen.

13. Verfahren zur Begrünung eines Daches, **dadurch gekennzeichnet, dass** Kassetten nach einem der voranstehenden Ansprüche 1 bis 11 am Boden mit Substrat gefüllt werden, dass eine Aufzucht der Begrünung aus dem Substrat insbesondere am Boden erfolgt, und dass die Kassetten auf dem zu begrünenden Dach fixiert werden.

14. Dach mit einer aufliegenden Dachbegrünungskassette nach einem der voranstehenden Ansprüche 1 bis 11.

## Claims

1. Roof-greening cassette, at least predominantly having walls and bases made of (porous) material having open pores, **characterized by** the following features:
a) zones of different density, wherein the bases have a lower density than the rest of the walls,
b) the density of the porous material in the region of the walls is 150 to 190 kg/m³, and in the region of a base wall is 120 to 160 kg/m³,
c) the porous material has a water absorption of 15 to 30 litres/m² in the case of a material thickness of 30 mm,
d) the porous material has a water permeability normal to the plane of 8 to 16 litres/(m² s), in the case of a water column of 200 mm and a material thickness of 30 mm.

2. Roof-greening cassette according to Claim 1, **characterized in that** the porous material has one or more of the following properties:
a) an air permeability of at least 400 litres/(m² s) at a test pressure and/or difference in pressure of 200 Pa, as measured on a test piece of 10 mm in thickness, in particular of 550 to 750 litres/(m² s),
b) 600 to 900 cells per cm².

3. Roof-greening cassette according to Claim 1 or 2, **characterized in that** the porous material in particular of the bases has a tensile strength of at least 100 kPa, preferably of approximately 120 to 140 kPa.

4. Roof-greening cassette according to Claim 1 or one of the further claims, **characterized in that** the porous material has one or more of the following properties:
a) an elongation at break of at least 60%, in particular of 70 to 85%,
b) a compression hardness of at least 20 kPa, in particular of 24 to 28 kPa,
c) the porous material contains carbon black particles for UV-stabilization purposes.

5. Roof-greening cassette according to Claim 1 or one of the further claims, **characterized in that** at least the bases consist wholly of the porous material.

6. Roof-greening cassette according to Claim 1 or one of the further claims, **characterized in that** walls and bases consist wholly of the porous material.

7. Roof-greening cassette according to Claim 1 or one of the further claims, **characterized in that** the porous material is elastic, open-celled and inhomogeneous and has zones of different hardness.

8. Roof-greening cassette according to Claim 1 or one of the further claims, **characterized by** at least one open-top compartment (11) which is formed by the walls and bases and which preferably has a filling of inorganic substances, the latter in particular having a particle size of 0.5 mm to 10 mm.

9. Roof-greening cassette according to Claim 1 or one of the further claims, **characterized in that** the walls are of visually closed design, in particular do not have any through-passages, openings, slots or apertures.

10. Roof-greening cassette according to Claim 1 or one of the further claims, **characterized in that** the bases are of visually closed design, in particular do not have any through-passages, openings, slots or apertures.

11. Roof-greening cassette according to Claim 1 or one of the further claims, **characterized by** underside grooves (16, 17), in particular at least in one direction centrally beneath upper-side compartments (11) and/or beneath upper-side walls (12 to 15).

12. Use of a roof-greening cassette according to one of the preceding claims for preparing and producing roof-greening systems.

13. Method for greening a roof, **characterized in that** cassettes according to one of preceding Claims 1 to 11 are filled with substrate at ground level, **in that** the greenery is cultivated from the substrate in particular at ground level, and **in that** the cassettes are fixed on the roof which is to be greened.

14. Roof with a roof-greening cassette according to one of preceding Claims 1 to 11 resting thereon.

## Revendications

1. Cassette de végétalisation de toiture, comprenant au moins principalement des parois et des fonds en un matériau présentant des pores ouverts (poreux), **caractérisée par** les caractéristiques suivantes :
a) des zones de différentes densités, les fonds présentant au demeurant une densité plus faible que les parois,
b) la densité du matériau poreux est dans la zone des parois de 150 à 190 kg/m³ et dans la zone d'une paroi de fond de 120 à 160 kg/m³,
c) le matériau poreux présente une absorption d'eau de 15 à 30 litres/m² à une épaisseur de matériau de 30 mm,
d) le matériau poreux présente une perméabilité à l'eau normalement au plan de 8 à 16 litres/(m² s), à une colonne d'eau de 200 mm et une épaisseur de matériau de 30 mm.

2. Cassette de végétalisation de toiture selon la revendication 1, **caractérisée en ce que** le matériau poreux présente une ou plusieurs des propriétés suivantes :
a) une perméabilité à l'air d'au moins 400 litres/(m² s) à une pression d'essai ou différence de pression de 200 Pa, mesurée sur un corps d'essai de 10 mm d'épaisseur, notamment de 550 à 750 litres/(m² s),
b) 600 à 900 cellules par cm².

3. Cassette de végétalisation de toiture selon la revendication 1 ou 2, **caractérisée en ce que** le matériau poreux notamment des fonds présente une résistance à la traction d'au moins 100 kPa, de préférence d'environ 120 à 140 kPa.

4. Cassette de végétalisation de toiture selon la revendication 1 ou l'une quelconque des autres revendications, **caractérisée en ce que** le matériau poreux présente une ou plusieurs des propriétés suivantes :
a) un allongement à la rupture d'au moins 60 %, notamment de 70 à 85 %,
b) une résistance à l'écrasement d'au moins 20 kPa, notamment de 24 à 28 kPa,
c) le matériau poreux contient des particules de noir de carbone (Carbon Black) pour la stabilisation UV.

5. Cassette de végétalisation de toiture selon la revendication 1 ou l'une quelconque des autres revendications, **caractérisée en ce qu'**au moins les fonds sont entièrement constitués du matériau poreux.

6. Cassette de végétalisation de toiture selon la revendication 1 ou l'une quelconque des autres revendications, **caractérisée en ce que** les parois et les fonds sont entièrement constitués du matériau poreux.

7. Cassette de végétalisation de toiture selon la revendication 1 ou l'une quelconque des autres revendications, **caractérisée en ce que** le matériau poreux est élastique, à cellules ouvertes et inhomogène, et comprend des zones de dureté différente.

8. Cassette de végétalisation de toiture selon la revendication 1 ou l'une quelconque des autres revendications, **caractérisée par** au moins un compartiment ouvert vers le haut (11), formé par les parois et les fonds, de préférence muni d'un remplissage de matières inorganiques, ces dernières ayant notamment une taille de grain de 0,5 mm à 10 mm.

9. Cassette de végétalisation de toiture selon la revendication 1 ou l'une quelconque des autres revendications, **caractérisée en ce que** les parois sont configurées sous forme optiquement dense, notamment sans percées, ouvertures, fentes ou évidements.

10. Cassette de végétalisation de toiture selon la revendication 1 ou l'une quelconque des autres revendications, **caractérisée en ce que** les fonds sont configurés sous forme optiquement dense, notamment sans percées, ouvertures, fentes ou évidements.

11. Cassette de végétalisation de toiture selon la revendication 1 ou l'une quelconque des autres revendications, **caractérisée par** des rainures (16, 17) sur le côté inférieur, notamment au moins dans une direction centrale sous des compartiments (11) sur le côté supérieur et/ou sous des parois (12 à 15) sur le côté supérieur.

12. Utilisation d'une cassette de végétalisation de toiture selon l'une quelconque des revendications précédentes pour la préparation et la production de végétalisations de toitures.

13. Procédé de végétalisation d'une toiture, **caractérisé en ce que** des cassettes selon l'une quelconque des revendications 1 à 11 précédentes sont remplies avec un substrat sur le fond, **en ce qu'**une culture de la végétalisation a lieu à partir du substrat notamment sur le fond, et **en ce que** les cassettes sont fixées sur la toiture à végétaliser.

14. Toiture sur laquelle repose une cassette de végétalisation de toiture selon l'une quelconque des revendications 1 à 11 précédentes.
